# EUROPÄISCHE PATENTSCHRIFT

(11) **EP 3 246 668 B1**
(45) Veröffentlichungstag und Bekanntmachung des Hinweises auf die Patenterteilung: **25.07.2018**
(21) Anmeldenummer: 16170299.8
(22) Anmeldetag: 19.05.2016
(51) Int. Cl.: G01F 1/66, G10K 11/00

(54) **MESSVORRICHTUNG UND VERFAHREN ZUM BESTIMMEN DER STRÖMUNGSGESCHWINDIGKEIT EINES IN EINER LEITUNG STRÖMENDEN FLUIDS**
MEASURING DEVICE AND METHOD FOR DETERMINING THE FLOW RATE OF A FLUID FLOWING WITHIN A PIPE
DISPOSITIF DE MESURE ET PROCEDE DE DETERMINATION DE LA VITESSE D'ECOULEMENT D'UN FLUIDE S'ECOULANT DANS UNE CONDUITE

(43) Veröffentlichungstag der Anmeldung: 22.11.2017
(73) Patentinhaber: SICK Engineering GmbH, 01458 Ottendorf-Okrilla (DE)
(72) Erfinder: STARKE, Dr. Eric, 01796 Pirna (DE); HERRMANN, Dr. Volker, 01665 Klipphausen (DE); SCHULZ, Dr. Christian, 01069 Dresden (DE)
(74) Vertreter: Hehl, Ulrich

(56) Entgegenhaltungen:
- DE-A1- 3 436 232
- DE-U1-202013 105 800
- US-A1- 2016 061 778

## Beschreibung

Die Erfindung betrifft eine Messvorrichtung und ein Verfahren zum Bestimmen der Strömungsgeschwindigkeit eines in einer Leitung strömenden Fluids nach dem Oberbegriff von Anspruch 1 beziehungsweise 13. Für die Bestimmung der Strömungsgeschwindigkeit oder des Durchflusses auf Ultraschallbasis sind unterschiedliche Messprinzipien bekannt. Bei einem Dopplerverfahren wird die je nach Strömungsgeschwindigkeit unterschiedliche Frequenzverschiebung eines an dem strömenden Fluid reflektierten Ultraschallsignals ausgewertet. Bei einem Differenzlaufzeitverfahren wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen.

Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ulraschallwandler gesorgt werden. Eine verbreitete Lösung besteht darin, die Ultraschallwandler mit direktem Kontakt zum Fluid in die Leitung hineinragen zu lassen. Solche intrusiven Sonden können genaue Messungen durch Störung der Strömung erschweren. Umgekehrt sind die eintauchenden Ultraschallwandler dem Fluid und dessen Druck und Temperatur ausgesetzt und werden dadurch womöglich beschädigt oder verlieren durch Ablagerungen ihre Funktion.

Grundsätzlich sind auch Techniken bekannt, bei denen die Innenwand vollständig geschlossen bleibt. Ein Beispiel ist die sogenannte Clamp-On-Montage etwa gemäß US 4 467 659, mit der Ultraschallwandler von außen an der Leitung befestigt werden. Damit können aber nur diametrale Messpfade durch die Rohrachse realisiert werden, wodurch bei nicht axialsymmetrischen Strömungsprofilen zusätzliche Fehler erzeugt werden.

Die EP 1 378 727 B1 schlägt vor, die Ultraschall erzeugenden Elemente an einer Au-ßenseite einer Wandung anzubringen. Im Gegensatz zur Clamp-On-Technik wird dabei der Ultraschallwandler gleichsam in die Wandung integriert. In dem Bereich der Ultraschallwandler wird eine Tasche mit erheblich geringerer Wandstärke als die restliche Wandung geformt, und die verbleibende Wandstärke bildet die Membran des Ultraschallwandlers. Diese auch als Clamp-In bezeichnete Montage ist gewissermaßen eine Zwischenform der festen Montage im Innenraum der Leitung und der Clamp-On-Montage. Dazu wird aber ein relativ komplizierter mehrteiliger Wandleraufbau verwendet. Dennoch bleibt die Abstrahlfläche für eine breite Abstrahlung bei höheren Frequenzen zu groß.

Die JP 2000 337 940 A zeigt eine weitere Durchflussmessvorrichtung, bei der die Piezoelektrischen Elemente die Leitungswand am Boden einer Bohrung in die Leitung kontaktieren. Die Probleme einer ausreichend breiten Abstrahlung und eines einfachen Wandleraufbaus werden dabei aber ebenfalls nicht gelöst.

In der DE 102 48 542 A1 wird vorgeschlagen, den Ultraschallwandler direkt auf eine Funktionsfläche aufzubringen, die mit dem Medium in Kontakt steht. Eine Pfadausrichtung mit einer Komponente in Strömungsrichtung wird durch Anschrägen der Funktionsflächen und damit der Leitung erreicht. Eine ebene, ungestörte Rohrinnenwand ist dadurch ausgeschlossen.

Die US 2016/0061778 A1 offenbart eine Fluidmessvorrichtung, bei der ein Ultraschallwandler über einen Keil auf eine Rohrleitung aufgesetzt wird. Mittels Ultraschall werden Eigenschaften des Fluids bestimmt, insbesondere das Fluid anhand der Schallgeschwindigkeit identifiziert oder in einer Konfiguration mit zwei schräg gestellten Ultraschallwandlern die Strömungsgeschwindigkeit gemessen. Als Anwendung ist vorgesehen, vergrabene Rohrleitungen zu untersuchen, um beispielsweise Wasser- und Gasleitungen zu unterscheiden.

Die DE 34 36 232 A1 beschreibt eine Messeinrichtung zum Bestimmen des Durchflusses in einem Rohr mit zwei einander schräg gegenüberliegenden Ultraschallwandlern, die jeweils über ein Schallübertragungsteil auf das Rohr aufgesetzt werden. Das Schallübertragungsteil besteht aus einem Quader, der sich jedoch im unteren Teil zum Rohr hin im Querschnitt trapezförmig verjüngt.

Die DE 20 2013 105 800 U1 offenbart eine Ultraschallmessvorrichtung zum Bestimmen der Strömungsgeschwindigkeit. Dabei werden die Ultraschallwandler in Hohlräumen der Kanalwand angeordnet. Nach innen hin verbleiben dünnwandige Bereiche, die zugleich als Membran der Ultraschallwandler dienen. Diese dünnwandigen Bereiche entstehen dadurch, dass Membrane aus einem Edelstahlblech des gleichen Mateirals wie der Messkörper mittels Laser ausgeschnitten und wiederum mittels Laser in den Messkörper eingeschweißt werden.

Es ist daher Aufgabe der Erfindung, ein verbessertes Wandlerkonzept für eine Messung von Strömungsgeschwindigkeiten mittels Ultraschall anzugeben.

Diese Aufgabe wird durch eine Messvorrichtung und ein Verfahren zum Bestimmen der Strömungsgeschwindigkeit eines in einer Leitung strömenden Fluids nach Anspruch 1 beziehungsweise 12 gelöst. Grundlage ist das einleitend erläuterte Clamp-In-Prinzip. Der Ultraschallwandler wird also von außen an die Leitungswand angebracht, und dessen Schwingkörper koppelt an einen Teilbereich der Leitungswand. Der Schwingkörper, beispielsweise eine Piezokeramik, nutzt also den Teilbereich als Membran. Die Erfindung geht dann von dem Grundgedanken aus, ein Koppelstück zwischen Membran und Schwingkörper anzuordnen. Dieses Koppelstück ist dünner, in realistischer Anwendung erheblich dünner als der Schwingkörper. Der Schwingkörper sitzt also wie eine Art Stempel mit dem Koppelstück auf der Leitungswand auf, und das Koppelstück überträgt Ultraschall zwischen Membran und Schwingkörper. Das kann in beide Richtungen erfolgen, je nachdem, ob der Ultraschallwandler als Sender oder als Empfänger fungiert. Durch diesen Aufbau begrenzen die Dimensionen des Koppelstücks und nicht diejenigen des Schwingkörpers die Größe der Abstrahlfläche. Es wird dadurch gleichzeitig eine kleine Wandlerplatte oder effektive Membran und ein großer Schwingkörper ermöglicht.

Die Erfindung hat zunächst alle Vorteile des Clamp-In, nämlich eine hohe Messgenauigkeit ähnlich einem intrusiven Verfahren, wobei aber zugleich der Innenraum für die Strömung völlig ungestört bleibt. Der in die Leitungswand integrierte Ultraschallwandler ermöglicht eine sehr breite Abstrahlcharakteristik und nicht diametrale Messpfade. Dabei hat der Ultraschallwandler einen einfachen Aufbau aus wenigen Teilen und ist serienfähig und kostengünstig in kleinen Abmaßen herstellbar.

Der Schwingkörper ist vorzugsweise in longitudinaler und transversaler Richtung schwingfähig. Der Schwingkörper nutzt also zusätzliche Freiheitsgrade, die ihm durch die Anordnung auf dem dünnen Koppelstück geboten werden. Weil die Schwingbewegung an das Ausschütteln eines Kissens erinnert, wird der Schwingkörper auch als Kissenschwinger bezeichnet. Eine vergleichbare Schwingung ist bei herkömmlicher Anordnung mit vollflächiger Verbindung der Unterseite des Schwingkörpers mit der Leitung gar nicht möglich.

Das Koppelstück ist vorzugsweise einstückig mit der Leitungswand ausgebildet. Das Koppelstück ist integraler Teil der Leitungswand. Es gibt demnach keine Zwischenschichten, keine Probleme mit mechanischer Stabilität der Verbindung und optimale Schallübertragung.

Die Messvorrichtung weist bevorzugt eine von außen in der Leitung angebrachte Tasche auf, deren Boden die Membran bildet, auf dem das Koppelstück angeordnet ist. Die Tasche führt dazu, dass der die Membran bildende Teilbereich der Leitungswand wesentlich dünner ausgebildet ist als die übrige Leitungswand. Das Koppelstück ist in seinem Querschnitt klein sowohl gegen den Schwingkörper als auch den Boden der Tasche. Vorzugsweise ist das Koppelstück Teil der Leitungswand und bleibt beim Ausbilden der Tasche stehen.

Der Schwingkörper ist vorzugsweise zumindest teilweise in der Tasche angeordnet. Noch bevorzugter ist der Schwingkörper vollständig innerhalb der Tasche untergebracht. Dadurch kann das Koppelstück auch vergleichsweise kurz bleiben, und die Elemente des Ultraschallwandlers sind in die Leitungswand integriert.

Die Tasche ist bevorzugt nach außen hin durch einen Wandlerhalter geschlossen. Der Wandhalter ist folglich eine Art Deckel des Ultraschallwandlerbereichs. Ein Zugang durch diesen Deckel beispielsweise für Anschluss- oder Datenleitungen bleibt aber möglich.

Der Schwingkörper ist vorzugsweise elastisch mit dem Wandlerhalter verbunden. So wird der Schwingkörper stabil gehaltert, ohne die Schwingbewegung einzuschränken. Dazu kann beispielsweise eine Elastomerschicht dienen.

Die Tasche weist bevorzugt einen zylindrischen oder kegelstumpfförmigen Abschnitt auf. Sie kann insgesamt die Form eines Zylinders oder Kegelstumpfes, aber auch eine Mischung aus beidem aufweisen. Außerdem sind Stufen denkbar, also eine sprungartige Änderung des Durchmessers in einer oder mehreren Höhenlagen der Tasche.

Der Schwingkörper ist vorzugsweise quader- oder zylinderförmig ausgebildet. Wie schon erläutert, sind wegen der Ankopplung über das Koppelstück die Dimensionen des Schwingkörpers nicht durch die Abstrahlfläche bestimmt. Der Schwingkörper ist vorzugsweise nicht nur eine dünne Keramik, sondern weist in Höhenrichtung eine Ausdehnung in ähnlicher Größenordnung auf, wie seine Querschnittsfläche. Der Schwingkörper kann auch aus mehreren Einzelschichten aufgebaut sein.

Das Koppelstück weist bevorzugt einen zylindrischen oder kegelstumpfförmigen Abschnitt auf. Die damit möglichen geometrischen Variationen entsprechen denjenigen der Tasche.

Das Fluid ist vorzugsweise eine Flüssigkeit. Mit einem Clamp-In-Durchflussmesser werden üblicherweise Strömungsgeschwindigkeiten von Gasen gemessen. Bei Gasen werden Ultraschallfrequenzen eingesetzt, die auch im herkömmlichen Aufbau eine realistische fertigungstechnische Umsetzung von Schwingkörper und als Membran fungierendem Teilbereich der Leitungswand erlauben. Die Anforderungen an den Aufbau rühren daher, dass eine breite Abstrahlcharakteristik nur mit Abstrahlflächen kleiner als die Wellenlänge möglich ist. Für Flüssigkeiten werden aber höhere Frequenzen benötigt. Dann müsste eine Abstrahlfläche von weniger als 4 mm bei einer Restwanddicke und Spalte unterhalb 500 µm erreicht werden. Erfindungsgemäß wird dieses Problem durch das Koppelstück und die damit erreichte Auflösung der Abhängigkeit der Dimensionierungen von Schwingkörper und Abstrahlfläche beziehungsweise die besondere Schwingung auf dem Koppelstück gelöst.

Die Messvorrichtung weist bevorzugt mindestens zwei Ultraschallwandler, die einander mit der Strömung dazwischen und einem Versatz in Strömungsrichtung gegenüberliegen, und eine Auswertungseinheit auf, die dafür ausgebildet ist, Ultraschallsignale zwischen den Ultraschallwandlern auszutauschen und die Strömungsgeschwindigkeit auf einem Laufzeitunterschied von mit und gegen die Strömung ausgesandtem und wieder empfangenem Ultraschall zu bestimmen. Damit wird zunächst nur ein Ultraschallpfad aufgespannt. Weitere Ultraschallpfade durch zusätzliche Ultraschallwandler sind aber denkbar, um eine inhomogene oder gestörte Strömung genauer zu erfassen. Ein Beispiel für ein alternatives Messprinzip ist das Dopplerverfahren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Längsschnittansicht einer Messvorrichtung zur Bestimmung der Strömungsgeschwindigkeit mit Ultraschallwandlern;
- Fig. 2: eine Detailansicht eines Ultraschallwandlerbereichs in Figur 1;
- Fig. 3: eine schematische dreidimensionale Darstellung der Schwingung eines Schwingkörpers eines Ultraschallwandler;
- Fig. 4: eine dreidimensionale Innenansicht einer Tasche in der Rohrwand für einen Ultraschallwandlers;
- Fig. 5: eine Außenansicht einer Tasche in der Rohrwand für einen Ultraschallwandler; und
- Fig. 6: eine Detailansicht eines Ultraschallwandlers ähnlich Fig. 2 für eine Geometrievariante einer Tasche.

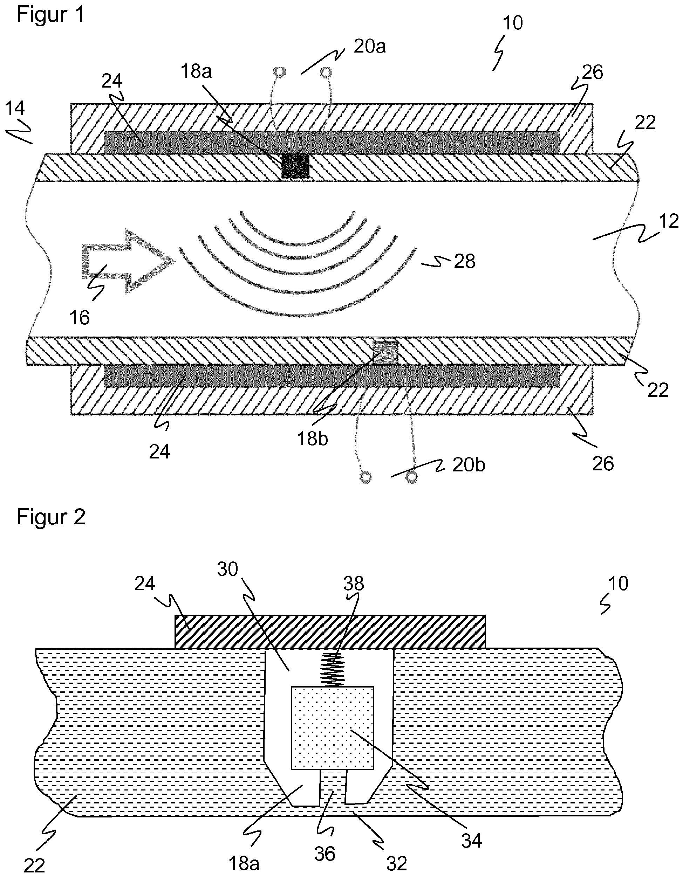

Figur 1 zeigt eine vereinfachte Längsschnittansicht einer Messvorrichtung 10 zur Bestimmung der Strömungsgeschwindigkeit beziehungsweise des daraus berechneten Durchflusses eines Fluids 12 in einer rohrförmigen Leitung 14, das in einer durch einen Pfeil 16 bezeichneten Richtung strömt. Die Bestimmung der Strömungsgeschwindigkeit erfolgt beispielsweise mit dem einleitend beschriebenen Differenzlaufzeitverfahren durch Auswertung der Laufzeiten bei Aussenden und Erfassen von Ultraschallsignalen zwischen einem Paar Ultraschallwandler 18a-b mit und gegen die Strömung in einer Steuer- und Auswertungseinheit. In Figur 1 ist die Steuer- und Auswertungseinheit nicht selbst dargestellt, sondern durch nur deren Anschlüsse 20a-b an die Ultraschallwandler 18a-b angedeutet. In anderen Ausführungsformen kann die Anzahl der Ultraschallwandler 18a-b variieren.

Die Leitung 14 im Bereich der Ultraschallmessung bildet einen Messkörper der Messvorrichtung 10. Die Darstellung ist so gewählt, als sei dieser Messkörper ein integraler Bestandteil der vorhandenen Leitung 14. Das ist prinzipiell möglich, in der Praxis wird aber die Messvorrichtung 10 mit einem eigenen Messkörper hergestellt, der nach der Montage einen entsprechenden Abschnitt einer vorhandenen Leitung ersetzt und dazu beispielsweise an beiden Seiten mit Flanschverbindungen eingefügt wird.

Die Ultraschallwandler 18a-b sind in eine Leitungswand 22 der Leitung 14 integriert. Das entspricht zunächst der einleitend erläuterten Clamp-In-Montage, jedoch mit einem erfindungsgemäßen Wandlerkonzept, das weiter unten unter Bezugnahme auf die Figuren 2 bis 6 näher erläutert wird. Die Ultraschallwandler 18a-b werden von außen durch einen Wandlerhalter 24 gestützt. Ganz außen ist in dieser beispielhaften Ausführungsform die Leitung 14 beziehungsweise der Wandlerhalter 24 im Bereich des Messkörpers von einem Gehäuse oder einem Verkleidungsrohr 26 umgeben.

Wie durch Schallausbreitungslinien 28 angedeutet, ist die Abstrahl- beziehungsweise Einstrahlrichtung der Ultraschallwandler 18a-b senkrecht zu einer Mittenachse der Leitung 14. Um dennoch einen axialen Versatz der beiden Ultraschallwandler 18a-b und damit einen Messeffekt bei einem Laufzeitdifferenzverfahren zu erzielen, ist eine breite Abstrahlcharakteristik von beispielsweise mehr als 20° erforderlich. Bei einer höheren Ultraschallfrequenz insbesondere im hohen kHz- oder sogar MHz-Bereich bedeutet dies eine Abstrahlfläche, deren Durchmesser nur noch in der Größenordnung eines Millimeters liegt.

Anstelle von zwei Ultraschallwandlern 18a-b können auch für eine Messvorrichtung 10 mit Mehrpfadauslegung mehrere Paare von Ultraschallwandlern vorgesehen sein, die zwischen einander eine Vielzahl von Messpfaden aufspannen. Mit einem solchen Mehrpfadzähler, der mehrere gegeneinander und gegen die Rohrachse versetzte Messpfade aufweist, ist bei ungleichmäßiger Strömung oder Vorstörungen eine genauere Messung möglich. Ein Einpfadzähler setzt implizit eine homogene Strömung voraus, die durch den einzigen Pfad erfassbar ist, beziehungsweise misst dadurch nur eine erste Näherung einer komplizierteren Strömung.

Figur 2 zeigt den Bereich eines Ultraschallwandlers 18a in der Leitungswand 22 in einer vergrößerten Darstellung, um die Verbesserung und Vereinfachung durch das erfindungsgemäße Wandlerprinzip genauer zu illustrieren. In der Leitungswand 22 ist ein Hohlraum oder eine Tasche 30 ausgebildet, die nach außen hin durch den Wandlerhalter 24 geschlossen wird. Nach innen hin verbleibt im Bereich der Tasche 30 von der Leitungswand 22 ein dünnwandiger Teilbereich 32, der zugleich als Membran des Ultraschallwandlers 18a dient und von dessen Schwingkörper 34, beispielsweise einer Piezokeramik, zum Schwingen angeregt wird, um ein Ultraschallsignal auszusenden, beziehungsweise es wird umgekehrt bei Auftreffen eines Ultraschallsignals aus dem Inneren der Leitung 14 auf den Teilbereich 32 der Schwingkörper 34 zum Schwingen angeregt. Der dünnwandige Teilbereich 32 bleibt stabil genug, um einem zu erwartenden Leitungsinnendruck standzuhalten. Die Leitungswand 22 bildet eine in sich geschlossene Innenfläche ohne Vertiefungen oder Vorsprünge, welche die Strömung stören oder an welchen sich Ablagerungen absetzen könnten.

Der Schwingkörper 34 ist nun nicht direkt auf den als Membran wirkenden Teilbereich 32 aufgesetzt. Vielmehr ist dazwischen ein Koppelstück 36 vorgesehen, dessen Querschnittsfläche deutlich kleiner ist als diejenige von Teilbereich 32 und Schwingkörper 34. Der Schwingkörper 34 kann als piezoelektrische Block ausgebildet sein, der direkt auf das Koppelstück 36 aufgesetzt wird. Es ist sowohl eine unmittelbare Verbindung zwischen Schwingkörper 34 und Koppelstück 36 als auch ein zusätzliche Koppelmaterial denkbar. Außerdem kannn die Verbindung lediglich durch eine kraftschlüssige Ankopplung, etwa durch eine Klemmkraft von oben, aber auch durch Verkleben oder Verlöten hergestellt sein.

Das Koppelstück 36 wiederum ist vorzugsweise integraler Bestandteil der Leitungswand 22, so dass zusätzliche Kontaktstellen entfallen. Dazu werden Tasche 30 und Koppelstück 36 vorzugsweise in einem effizienten Fertigungsverfahren gemeinsam ausgebildet, und dabei wird das Koppelstück 36 sozusagen stehen gelassen. Es soll aber trotz der absehbaren Nachteile bei Schallübertragung und mechanischer Robustheit nicht ausgeschlossen sein, das Koppelstück 36 als eigenes Element am Boden der Tasche 30 an dem Teilbereich 32 zu befestigen. Nach außen hin ist der Schwingkörper nachgiebig am Wandlerhalter 24 gehalten, was durch eine Feder 38 dargestellt ist. Eine beispielhafte praktische Umsetzung der Feder 38 ist eine Elastomerschicht. Die Kraft der Feder 38 kann auch die Verbindung zwischen Schwingkörper 34 und Koppelstück 36 herstellen oder stabilisieren.

Das Koppelstück 36 ermöglicht eine Wandlerplatte oder Abstrahlfläche mit kleinem Durchmesser bei gleichzeitiger Nutzung eines größeren Schwingkörpers 34. Die mögliche Dimensionierung von Schwingkörper 34 und Abstrahlfläche wird durch das Koppelstück 36 unabhängig voneinander. Ein größerer Schwingkörper 34 ist funktional sowohl für die Frequenzauslegung als auch zum Erreichen der nötigen Empfindlichkeit vorteilhaft. Wie schon mehrfach angesprochen, ist für eine breite Abstrahlcharakteristik gerade bei höheren Frequenzen eine kleine Abstrahlfläche erforderlich. Durch das Koppelstück 36 können diese anfangs widersprüchlichen Anforderungen zugleich erfüllt werden.

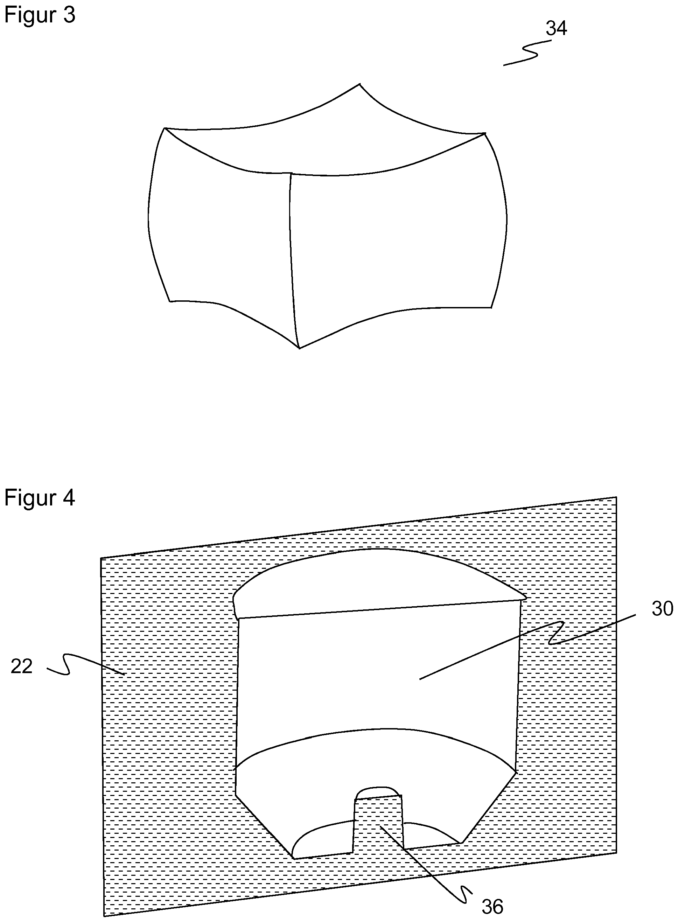

Figur 3 zeigt noch einmal gesondert eine schematische dreidimensionale Darstellung des Schwingkörpers 34 zur Erläuterung von dessen Schwingverhalten. Die konkrete quader- oder würfelförmige Geometrie des Schwingkörpers 34 ebenso wie die konkrete Verformung durch die Schwingung sind beispielhaft zu verstehen. Der Schwingkörper 34 führt durch die nur kleinflächige Festlegung am Koppelstück 36 und seine geometrische Ausdehnung in Höhen- und Seitenrichtung im Betrieb eine besondere Schwingung aus, die anschaulich als Kissenschwingung bezeichnet wird, weil sie an ein kräftig ausgeschütteltes Kopfkissen erinnert. Man kann dies als Volumenresonanz auffassen. Während der Schwingkörper 34 in der longitudinalen Arbeitsrichtung kürzer wird, also in Figur 3 in Höhenrichtung, verdickt er sich transversal zu allen Seiten. Aufgrund der Blockgeometrie ist dies an den seitlichen Kanten besonders ausgeprägt. Die Verkürzung in longitudinaler Richtung ist auch nicht gleichmäßig, sondern in der Mitte sehr stark ausgeprägt, während sich die Ecken weniger bewegen. Diese Schwingung wird durch das Koppelstück 36 auf die Membran beziehungsweise den Teilbereich 32 übertragen, oder umgekehrt versetzt die Membran bei auftreffendem Ultraschall über das Koppelstück 36 den Schwingkörper 34 in Schwingung.

Der Schwingkörper 34 arbeitet vorzugsweise in einem Frequenzbereich von einigen hundert KHz bis hin zu einigen MHz, wobei aber das Prinzip auch von wenigen kHz bis zumindest zehn MHz funktioniert. Die konkreten Nutzfrequenzen werden von der Geometrie und dem Material festgelegt, so dass dies bei der Auslegung des Schwingkörpers 34 berücksichtigt wird. Der Schwingkörper 34 wird vorzugsweise in einer seiner Resonanzen betrieben, das Koppelstück 36 in seiner Resonanz oder unterhalb seiner Resonanz. Auch die Resonanz des Teilbereichs 32 kann wahlweise genutzt werden.

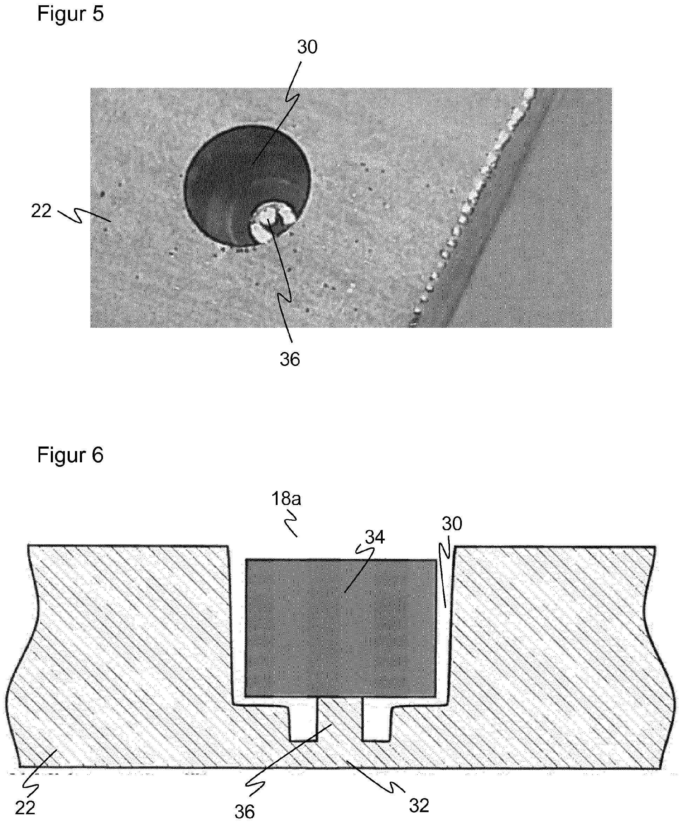

Figur 4 zeigt noch einmal die Tasche 30 mit dem Koppelstück 36 in einer dreidimensionalen Schnittansicht. Die Tasche 30 ist im oberen Bereich zylinderförmig und verjüngt sich nach innen hin durch eine Kegelstumpfform. Dadurch reduziert sich die Innenkontur in Richtung des Teilbereichs 32, der somit eine kleinere Fläche aufweist als der Querschnitt im oberen Bereich der Tasche 30, die insbesondere aufgrund der Koppelstücks 36 auch kleiner sein kann als der Schwingkörper 34. Das Koppelstück 36 ist in dieser Ausführungsform zylindrisch geformt. Figur 5 zeigt ein Foto einer Leitungswand 22 mit vorbereiteter Tasche 30 und Kopplungsstück 36.

Figur 6 zeigt noch einmal einen Längsschnitt der Messvorrichtung 10 im Bereich eines Ultraschallwandlers 18a ähnlich der Figur 2, jedoch mit einer anderen Geometrie der Tasche 30. Während sich bisher die Tasche 30 zum Teilbereich 30 hin kegelförmig verjüngt, ist in Figur 6 eine gestufte Ausführung der Tasche mit einem größeren Zylinderdurchmesser im Bereich des Schwingkörpers 34 und einem kleinen Zylinderdurchmesser im Bereich des Koppelstücks 36 dargestellt. Das sind nur Beispiele der Taschengeometrie. Die Tasche 30 kann auch zylindrisch ohne Querschnittsreduktion, mit mehr Stufen, anderen Kombinationen von Zylinder- und Kegelabschnitten oder in noch anderen Geometrien ausgebildet sein. Das gilt ganz entsprechend auch für das Koppelstück 36, dort bleibt allerdings die Bedingung einer gegenüber dem Schwingkörper 34 merklich kleineren Querschnittsfläche bestehen. Für den Schwingkörper 34 kommt beispielsweise die Form eines Würfels, eines Quaders oder eines Zylinders in Betracht.

## Patentansprüche

1. Messvorrichtung (10) zum Bestimmen der Strömungsgeschwindigkeit eines in einer Leitung (14) strömenden Fluids (12) mit mindestens einem Ultraschallwandler (18a-b), der von außen an die Leitungswand (22) angebracht ist und einen Schwingkörper (34) aufweist, der an einen Teilbereich (32) der Leitungswand (22) ankoppelt, der als schwingungsfähige Membran des Ultraschallwandlers (18a-b) wirkt,
**dadurch gekennzeichnet,**
**dass** zwischen Membran (32) und Schwingkörper (34) ein Koppelstück (36) angeordnet ist, dessen Querschnitt kleiner ist als der Querschnitt des Schwingkörpers (34).

2. Messvorrichtung (10) nach Anspruch 1,
wobei der Schwingkörper (34) in longitudinaler und transversaler Richtung schwingfähig ist.

3. Messvorrichtung (10) nach Anspruch 1 oder 2,
wobei das Koppelstück (36) einstückig mit der Leitungswand (22) ausgebildet ist.

4. Messvorrichtung (10) nach einem der vorhergehenden Ansprüche,
die eine von außen in der Leitung (14) angebrachte Tasche (30) aufweist, deren Boden die Membran (32) bildet, auf dem das Koppelstück (36) angeordnet ist.

5. Messvorrichtung (10) nach Anspruch 4,
wobei der Schwingkörper (34) zumindest teilweise in der Tasche (30) angeordnet ist.

6. Messvorrichtung (10) nach Anspruch 4 oder 5,
wobei die Tasche (30) nach außen hin durch einen Wandlerhalter (24) geschlossen ist.

7. Messvorrichtung (10) nach Anspruch 6,
wobei der Schwingkörper (34) elastisch mit dem Wandlerhalter (24) verbunden ist.

8. Messvorrichtung (10) nach einem der Ansprüche 4 bis 7,
wobei die Tasche (30) einen zylindrischen oder kegelstumpfförmigen Abschnitt aufweist.

9. Messvorrichtung (10) nach einem der vorhergehenden Ansprüche,
wobei der Schwingkörper (34) quader- oder zylinderförmig ausgebildet ist.

10. Messvorrichtung (10) nach einem der vorhergehenden Ansprüche,
wobei das Koppelstück (36) einen zylindrischen oder kegelstumpfförmigen Abschnitt aufweist.

11. Messvorrichtung (10) nach einem der vorhergehenden Ansprüche,
wobei das Fluid (12) eine Flüssigkeit ist.

12. Messvorrichtung (10) nach einem der vorhergehenden Ansprüche,
die mindestens zwei Ultraschallwandler (18a-b) aufweist, die einander mit der Strömung dazwischen und einem Versatz in Strömungsrichtung gegenüberliegen, und eine Auswertungseinheit aufweist, die dafür ausgebildet ist, Ultraschallsignale zwischen den Ultraschallwandlern (18a-b) auszutauschen und die Strömungsgeschwindigkeit auf einem Laufzeitunterschied von mit und gegen die Strömung ausgesandtem und wieder empfangenem Ultraschall zu bestimmen.

13. Verfahren zum Bestimmen der Strömungsgeschwindigkeit eines in einer Leitung (14) strömenden Fluids (12), bei dem ein von außen an die Leitungswand (22) angebrachter Ultraschallwandler (18a-b) mit einem Schwingkörper (34), der an einen Teilbereich (32) der Leitungswand (22) ankoppelt, den Teilbereich (32) als schwingungsfähige Membran nutzt,
**dadurch gekennzeichnet,**
**dass** Ultraschall zwischen Membran (32) und Schwingkörper (34) durch ein Koppelstück (36) übertragen wird, dessen Querschnitt kleiner ist als der Querschnitt des Schwingkörpers (34).

14. Verfahren nach Anspruch 13,
wobei der Schwingkörper (34) in eine Schwingung in longitudinaler und transversaler Richtung versetzt wird.

15. Verfahren nach Anspruch 13 oder 14,
wobei der Ultraschall durch ein mit der Leitungswand (22) einstückig ausgebildetes Koppelstück (36) direkt zwischen Schwingkörper (34) und Leitungswand (22) übertragen wird.

## Claims

1. A measuring apparatus (10) for determining the flow speed of a fluid (12) flowing in a conduit (14) using at least one ultrasonic transducer (18a-b) that is attached to a conduit wall (22) from the outside and that has an oscillating body (34) that couples to a part region (32) of the conduit wall (22) that acts as an oscillating membrane of the ultrasonic transducer (18a-b),
**characterized in that** a coupling piece (36) whose cross-section is smaller than the cross-section of the oscillating body (34) is arranged between the membrane (32) and the oscillating body (34).

2. The measuring apparatus (10) in accordance with claim 1,
wherein the oscillating body (34) can vibrate in longitudinal and transverse directions.

3. The measuring apparatus (10) in accordance with claim 1 or 2,
wherein the coupling piece (36) is configured in one piece with the conduit wall (22).

4. The measuring apparatus (10) in accordance with any of the preceding claims, which has a pocket (30) that is formed in the conduit (14) from the outside and whose base forms the membrane (32) on which the coupling piece (36) is arranged.

5. The measuring apparatus (10) in accordance with claim 4,
wherein the oscillating body (34) is at least partly arranged in the pocket (30).

6. The measuring apparatus (10) in accordance with claim 4 or 5,
wherein the pocket (30) is closed toward the outside by a transducer holder (24).

7. The measuring apparatus (10) in accordance with claim 6,
wherein the oscillating body (34) is elastically connected to the transducer holder (24).

8. The measuring apparatus (10) in accordance with any of claims 4 to 7,
wherein the pocket (30) has a cylindrical or frustoconical section.

9. The measuring apparatus (10) in accordance with any of the preceding claims,
wherein the oscillating body (34) is of parallelepiped shape or cylinder shape.

10. The measuring apparatus (10) in accordance with any of the preceding claims,
wherein the coupling piece (36) has a cylindrical or frustoconical section.

11. The measuring apparatus (10) in accordance with any of the preceding claims,
wherein the fluid (12) is a liquid.

12. The measuring apparatus (10) in accordance with any of the preceding claims, which has at least two ultrasonic transducers (18a-b) which are disposed opposite one another with the flow therebetween and with an offset in the direction of the flow, and which has an evaluation unit that is configured to exchange ultrasonic signals between the ultrasonic transducers (18a-b) and to determine the flow speed with respect to a time of flight difference of ultrasound transmitted and received with and against the flow.

13. A method of determining the flow speed of a fluid (12) flowing in a conduit (14) in which an ultrasonic transducer (18a-b), which is attached to a conduit wall (22) from the outside and has an oscillating body (34) that couples to a part region (32) of the conduit wall (22), uses the part region (32) as an oscillating membrane,
**characterized in that** ultrasound is transmitted between the membrane (32) and the oscillating body (34) by a coupling piece (36) whose cross-section is smaller than the cross-section of the oscillating body (34).

14. The method in accordance with claim 13,
wherein the oscillating body (34) is set into an oscillation in longitudinal and transverse directions.

15. The method in accordance with claim 13 or 14,
wherein the ultrasound is directly transmitted between the oscillating body (34) and the conduit wall (22) by a coupling piece (36) formed in one piece with the conduit wall (22).

## Revendications

1. Dispositif de mesure (10) pour déterminer la vitesse d'écoulement d'un fluide (12) s'écoulant dans une conduite (14), comportant au moins un transducteur ultrasonore (18a-b) qui est monté depuis l'extérieur sur la paroi de conduite (22) et qui comprend un corps vibrant (34) couplé à une zone partielle (32) de la paroi de conduite (22) qui fait office de membrane capable de vibrer du transducteur ultrasonore,
**caractérisé en ce que**
un élément de couplage (36) est agencé entre la membrane (32) et le corps vibrant (34), dont la section transversale est inférieure à la section transversale du corps vibrant (34).

2. Dispositif de mesure (10) selon la revendication 1,
dans lequel le corps vibrant (34) est capable de vibrer en direction longitudinale et transversale.

3. Dispositif de mesure (10) selon la revendication 1 ou 2,
dans lequel l'élément de couplage (36) est réalisé d'un seul tenant avec la paroi de conduite (22).

4. Dispositif de mesure (10) selon l'une des revendications précédentes,
qui comprend une poche (30) montée depuis l'extérieur sur la conduite (14), dont le fond constitue la membrane (32) et sur lequel est agencé l'élément de couplage (36).

5. Dispositif de mesure (10) selon la revendication 4,
dans lequel le corps vibrant (34) est agencé au moins partiellement dans la poche (30).

6. Dispositif de mesure (10) selon la revendication 4 ou 5,
dans lequel la poche (30) est refermée vers l'extérieur par un porte-transducteur (24).

7. Dispositif de mesure (10) selon la revendication 6,
dans lequel le corps vibrant (34) est relié élastiquement au porte-transducteur (24).

8. Dispositif de mesure (10) selon l'une des revendications 4 à 7,
dans lequel la poche (30) comprend une portion cylindrique ou tronconique.

9. Dispositif de mesure (10) selon l'une des revendications précédentes,
dans lequel le corps vibrant (34) est réalisé en forme de parallélépipède ou de cylindre.

10. Dispositif de mesure (10) selon l'une des revendications précédentes,
dans lequel l'élément de couplage (36) comprend une portion cylindrique ou tronconique.

11. Dispositif de mesure (10) selon l'une des revendications précédentes, dans lequel le fluide (12) est un liquide.

12. Dispositif de mesure (10) selon l'une des revendications précédentes, qui comprend au moins deux transducteurs ultrasonores (18a-b) qui sont opposés l'un à l'autre en ayant l'écoulement entre eux et en présentant un décalage en direction d'écoulement, ainsi qu'une unité d'évaluation réalisée pour échanger des signaux ultrasonores entre les transducteurs ultrasonores (18a-b) et pour déterminer la vitesse d'écoulement en se basant sur une différence dans le temps de parcours des ultrasons émis et reçus dans le sens de l'écoulement et en sens opposé.

13. Procédé pour déterminer la vitesse d'écoulement d'un fluide (12) s'écoulant dans une conduite (14), dans lequel un transducteur ultrasonore (18a-b) qui est monté depuis l'extérieur sur la paroi de conduite (22) et qui comprend un corps vibrant (34) couplé à une zone partielle (32) de la paroi de conduite (22) utilise la zone partielle (32) à titre de membrane capable de vibrer,
**caractérisé en ce que**
les ultrasons sont transmis entre la membrane (32) et le corps vibrant (34) à travers un élément de couplage (36) dont la section transversale est inférieure à la section transversale du corps vibrant (34).

14. Procédé selon la revendication 13,
dans lequel le corps vibrant (34) est mis en vibration en direction longitudinale et transversale.

15. Procédé selon la revendication 13 ou 14,
dans lequel les ultrasons sont transmis directement entre le corps vibrant (34) et la paroi de conduite (22) à travers un élément de couplage (36) réalisé d'un seul tenant avec la paroi de conduite (22).
